# NEW EUROPEAN PATENT SPECIFICATION

(11) **EP 2 597 142 B2**
(45) Date of publication and mention of the opposition decision: **26.02.2020**
(45) Mention of the grant of the patent: 19.07.2017
(21) Application number: 11190313.4
(22) Date of filing: 23.11.2011
(51) Int. Cl.: C11B 3/00, A23D 9/04, C11B 3/02, C11B 3/10, C11C 1/08, C11C 1/10, C11B 3/14

(54) **De-acidification of fats and oils**
Entsäuerung von Fetten und Ölen
Désacidification des graisses et des huiles

(43) Date of publication of application: 29.05.2013
(73) Proprietor: Alfa Laval Corporate AB, 221 00 Lund (SE)
(72) Inventor: Marques de Lima, Danilo, 01258-010 SAO PAULO (BR); SARUP, Bent, DK-3480 FREDENSBORG (DK)
(74) Representative: Grünecker Patent- und Rechtsanwälte PartG mbB

(56) References cited:
- WO-A2-03/080778
- US-A1- 2010 200 805

## Description

The present invention relates to a new method for treating vegetable oils and/or animal fats.

### Background

Most edible oils go through refining operations comprising pretreatment steps known as degumming and/or neutralisation, most often followed by treatment with a solid adsorbent, e.g. acid activated clay, known as bleaching. Pretreatment of oils for non-edible use, such as manufacture of biodiesel, may or may not include the bleaching operation. The pretreated oil is subsequently subjected to a high temperature operation known as deodorization. Deodorisation is conducted under vacuum and consists in general of two main process steps, a "heat bleaching" step, typically conducted within a range from about 240 to about 270 °C within 0.5 to 1.5 hrs retention time and a second step consisting of stripping of volatiles by the use of steam. Pretreatment of oil for non-edible use such as biodiesel manufacture does normally not include the heat bleaching step. Steam stripping, also known as de-acidification, of fats and oils, comprises reduction of free fatty acid (FFA) content by stripping with steam under vacuum. Volatiles are mainly those present in the pretreated oil, but volatiles may also be formed during the deodorisation operation, e.g. at the heat bleaching step. Steam stripping of volatile components may take place before, during or after the heat bleaching step. An example of deodorisation conducted by steam stripping in combination with heat bleaching is disclosed by WO 98/00484. Simultaneously with the removal of FFA, the steam stripping action will also partly remove valuable components such as micronutrients including tocopherols, sterols, squalene as well as "neutral oils", i.e. tri-, di- and mono-acylglycerides (TAG, DAG, MAG), which represents a loss of valuable main product. Volatiles are condensed in a cold condensation zone before the stripping steam along with non-condensable gases (e.g. inleakage air) are being lead to the vacuum system. Such a cold condensation zone commonly operates within a range from about 40 to about 60 °C and is commonly implemented as a scrubber loop, where cold distillate is used to condense the volatiles. The cold distillate will, besides the FFA:s, also contain micronutrients and "neutral oils". Due to the high value of the micronutrients there is particular interest in recovering those from the distillate. However, the micronutrients need to be enriched in their concentration in the plant so that their further processing in purification plants and transport to such plants can take place in an economical manner. The loss of "neutral oils" will further dilute any enriched stream of micronutrients that can be withdrawn from the system.

A current trend in the edible oil industry is to use certain enzymes, commonly known as phospholipase A ("PLA") type enzymes, to enable removal of phosphorous containing components ("phospholipids") of the crude edible oil down to very low ppm levels, acting by producing more water-soluble lysophospholipids by splitting off a fatty acid from the phospholipid. However, a side effect of this process is increased production of FFA, which will dilute the micronutrients in the deodorizer distillates. Another type of enzymes commonly know as phospholipase C ("PLC") type enzymes have also recently been taken into large scale industrial use. These enzymes give increased yields of oil-product by converting phospholipids to DAG. However, the increased level of DAG in the oils tends to aggravate the problem with neutral oils loss during the steam stripping operation since the vapour pressure of DAG is higher than the vapour pressure of TAG.

In recent years some refiners has in their deodorization sections included an additional condensation zone an arrangement often referred to as "double scrubbers" disclosed in US 6750359, having an additional scrubber at high temperature. While use of this "double scrubber" enables withdrawal of a sidestream of condensate from the high temperature condensation step enriched in micronutrients, there remains a significant loss of micronutrients in the FFA rich overhead stream. A further significant limitation of such approach is that the separation efficiency in the hot scrubber is closely linked to the operating conditions of the deodorizer, where the main function is to produce edible oil by stripping steam under vacuum. Such linkage will impose rather low limits for the obtainable enrichment for the tocopherols in any distillate stream withdrawn from the hot scrubber. Other methods according to the prior art are disclosed by US7598407 and US2010/0200805.

A further trend in the industry is to move towards de-acidification, i.e. "physical refining" for oils, such as soybean oil, which traditionally are refined by neutralizing the free fatty acids with caustic to form soaps, subsequently separated by water washing. The by-product from this operation, soap stock, is of low value and furthermore leads to oil losses. In the physical refining route the content of FFA to the de-acidification column will increase from about 0.05 to about 0.1 percent by weight (wt%), being FFA contents typical for a neutralized and bleached oil, to the FFA levels in the crude oil, e.g. 0.5 to 1 wt% in the case of soybean oil, or 3 to 6 wt% in the case of palm oil. This will lead to handling of more FFA in the stripping column, also directionally diluting side-streams enriched in micronutrients.

FFA containing distillates from de-acidification of fats and oils have traditionally been used for soap manufacture, but are to an increasing extent now being used as raw materials for higher value oleo-chemicals, such as higher purity fatty acids produced by fatty acid distillation leading via further conversion to fatty acid esters, fatty alcohols, fatty alcohol sulphates, fatty amines and other oleo-chemical products for e.g. the detergent or cosmetics industry. It is desirable for such processing of the distillates to have as high purity of FFA as possible, which would mean reducing the content of other volatiles such as micronutrients and neutral oils.

Palm oil is always refined using the physical refining method due to the high content of FFA in palm oil, typically the content of FFA is within the range of from about 3 to about 6 wt%. Furthermore, palm oil has a high content of MAG and DAG, the DAG content e.g. typically being in the range of from about 5 to about 7 wt%. Such high content of FFA and volatile neutral oils components leads to much elevated neutral oils loss and dilution of micronutrients in the distillate condensate streams.

The main challenges can therefore be summarized as follows
1. Reduction of neutral oil loss.
2. Recovery of micronutrients with minimal loss and in enriched streams.
3. Increasing the purity of the FFA product stream.

### The invention

The purpose for the present invention is to find a solution to the above mentioned technical problems and to find a method for reduction of neutral oil loss, recovery of micronutrients with minimal loss recovery of micronutrients in micronutrient enriched streams, and increasing the purity of the FFA product stream. Thus, the present invention relates to a method for treating vegetable oils and/or animal fats as defined in the claims. The vacuum steam stripping column in step (i) may be a packed column or a column with trays or any combination of packing and trays.

The vacuum steam stripping column in step (i) may be operating according to one alternative of the invention within a range from about 1 to about 10 mbar, preferably from about 2 to about 5 mbar vacuum level.

The high temperature condensing zone in step (ii) may be operating according to another alternative of the invention at a temperature within the range from about 150 to about 230°C, preferably at a temperature within the range from about 180 to about 210°C.

The cold temperature condensing zone in step (iii) operates at a temperature within the range of from about 25 to about 80°C, preferably from about 40 to about 60°C.

The method may also comprise a distillation step (iv) according to an alternative of the invention comprising distilling the condensate from step (iii) in vacuum of at least 0.001 mbar, achieving essentially complete recovery of micronutrients combined with a degree of enrichment, both of which are not achievable simultaneously with prior art. The distillation step will produce a fatty acid product stream and a stream enriched in micronutrients. The vacuum distillation operation in step (iv) may be selected from the group consisting of short-path distillation, wiped-film evaporators, vacuum flash operations, counter-current multistage distillation columns.

The vacuum distillation operation in step (iv) may be operating according to a further alternative of the invention within a pressure range from about 0.001 to about 10 mbar, preferably from about 1 to about 10 mbar, more preferred from about 2 to about 5 mbar.

The method according to one embodiment of the invention may comprise a vacuum distilling step between the high temperature condensation zone in step (ii) and the low temperature condensation zone in step (iii). The between vacuum distilling step may be operating within a pressure range from about 0.001 to about 10 mbar, preferably from about 1 to about 10 mbar, more preferred from about 2 to about 5 mbar.

The new method for treating vegetable oils and/or animal fats provides improved recovery of neutral oils by changing the configuration and operating philosophy of the high temperature condensation stage fundamentally from prior art, which gives a possibility to recover neutral oil while at the same time allowing volatile micronutrients to pass to a recovery and enrichment operation. Another improvement is that micronutrients from the high temperature condensation zone are quickly cooled and quantitatively captured in the cold condensation zone, thus leading to an essentially no-loss operation for the micronutrients. Alternatively, the micronutrients are quantitatively captured in a distillation step before the cold condensation step. A further improvement is enrichment of the recovered micronutrients by applying a vacuum distillation operation at a suitable vacuum level and separation efficiency, which allows the required enrichment of the recovered micronutrients. Micronutrients, especially the tocopherols and tocotrienols, are antioxidants and known to deteriorate during extended storage and transport. The immediate enrichment in the plant has the advantage that it becomes more feasible to package the enriched products in a protective manner to reduce such deterioration. A further advantage of conducting the vacuum distillation in the plant is that the utility supply facilities such as steam, vacuum, electricity, cooling water as well as automation is shared with the main plant. Reducing the presence of neutral oils will greatly assist in the preparation of the enriched micronutrient stream. Furthermore, the vacuum distillation operation in step (iv) and the vacuum distilling step between high temperature condensation step (ii) and low temperature condensation step (iii) may as an overhead product give a FFA stream having an improved purity compared to the produced FFA streams according to prior art.

The invention is illustrated by the accompanying drawings and examples. If not otherwise stated in the examples and tables the percentage is given by percent by weight (wt%).

### Brief description of the drawings.

- Figure 1: discloses a prior art method for treating vegetable oils and/or animal fats.
- Figure 2: discloses a method for treating vegetable oils and/or animal fats according to one embodiment of the invention.
- Figure 3: discloses a method for treating vegetable oils and/or animal fats according to an alternative embodiment of the invention.

### Detailed description of the drawings

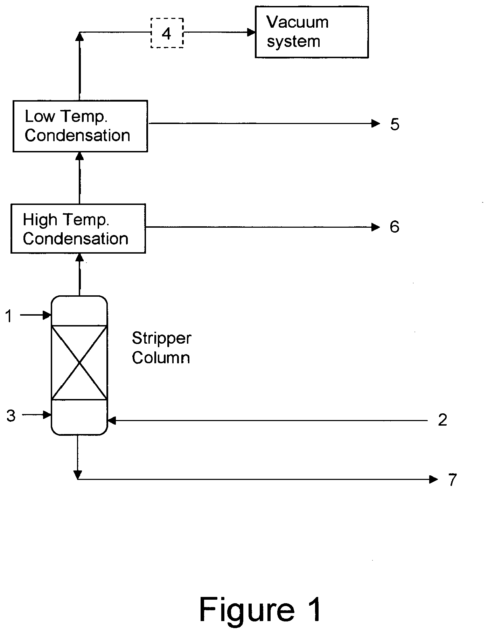

Figure 1 illustrates one embodiment of prior art wherein an oily feed stream 1 is feed to a vacuum steam stripping column together with stripping steam 2 and in-leakage of air 3. Fatty acids, micronutrients together with other volatiles, and neutral oils are stripped off and transferred to a high temperature condensing zone. At the high temperature condensing zone a stream enriched in micronutrients 6 is condensed and separated off from the feed. The separated feed is further transferred to a cold condensation zone, producing a fatty acid product stream 5 which is condensed, and a stream 4 of steam, non-condensable gases along with traces of fatty acids and other lighter hydrocarbons vapours, allowing stream 4 to continue to vacuum system. From the vacuum steam stripping column is a product neutral oil stream 7 recovered.

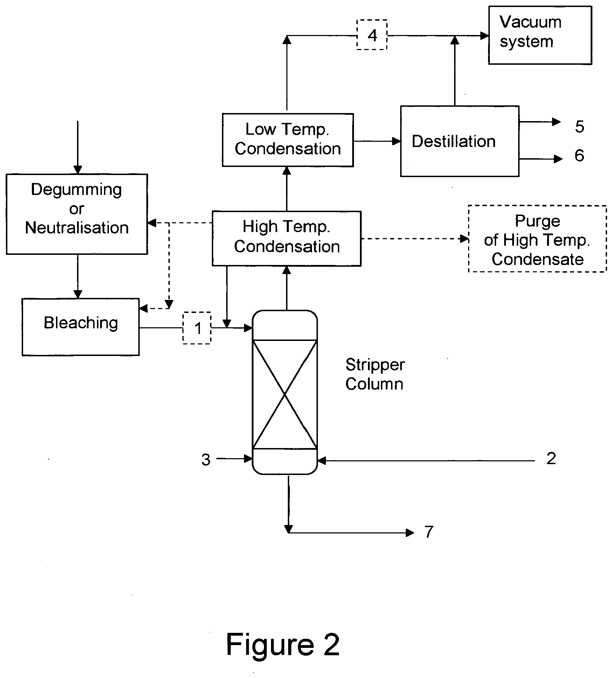

Figure 2 is showing a method according to one embodiment of the invention. An oily, pretreated feed stream 1 is fed to a vacuum steam stripping column together with stripping steam 2 and in-leakage of air 3. In the vacuum steam stripping column fatty acids, micronutrients together with other volatiles, and neutral oils are stripped off and transferred to a high temperature condensing zone in step (ii). At the high temperature condensing zone the neutral oils are condensed from the vapour phase. The condensed neutral oils are retained and sent back to the stripping column either directly, or indirectly via upstream operations, such as to a bleaching operation and/or to degumming/neutralisation operation. Optionally a purge stream of the condensate from the high temperature condensation loop can be taken out as indicated with the dashed line. From the vacuum steam stripping column a neutral oil stream 7 recovered as product

The stripping steam, volatile fatty acids, micronutrients together with other volatiles are allowed to pass to a cold condensation zone. At the cold condensation zone the volatile fatty acids, micronutrients together with other volatiles are condensed. A stream 4 of steam, non-condensable gases along with traces of fatty acids and other lighter hydrocarbons vapours are allowed to continue to the vacuum system.

The condensate of volatile fatty acids, micronutrients together with other volatiles is transferred to a distilling section in step (iv) to separate the condensate into a fatty acid product stream 5, a residual stream 4 of steam, non-condensable gases along with traces of fatty acids and other lighter hydrocarbons vapours, and a stream enriched in micronutrients 6. Residual stream 4 of steam, non-condensable gases along with traces of fatty acids and other lighter hydrocarbons vapours are allowed to continue to the vacuum system. The vacuum distillation operation is selected from the group consisting of short-path distillation, wiped-film evaporators, vacuum flash operations, counter-current multistage distillation columns.

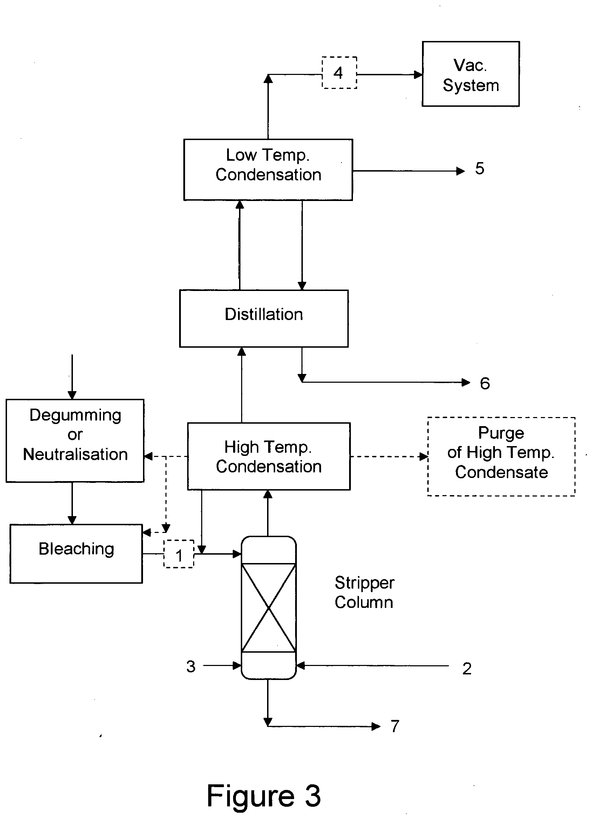

Figure 3 is showing an alternative embodiment of the invention. According to this embodiment a distillation operation is placed between the high temperature condensation zone in step (ii) and the low temperature condensation zone in step (iii). A pretreated feed of oil stream 1 is fed to a vacuum steam stripping column together with stripping steam 2 and in-leakage of air 3. Fatty acids, micronutrients together with other volatiles, and neutral oils are stripped off in the stripper column, and transferred to the high temperature condensing zone. At the high temperature condensing zone the neutral oils are condensed from the vapour phase. The condensed neutral oils are retained and sent back to the stripping column either directly, or indirectly via upstream operations, such as to bleaching operation and/or to degumming/neutralisation operation. Optionally a purge stream of the condensate from the high temperature condensation loop can be taken out as indicated with the dashed line. From the vacuum steam stripping column a neutral oil stream 7 is recovered as product.

The stripping steam, volatile fatty acids, micronutrients together with other volatiles from the high temperature condensate zone in step (ii) is fed to the distillation column. In the distillation column this stream of volatile components meets a distillate stream being returned from the cold temperature condensation step, leading to formation of a reflux of condensate. The distilling column together with the cold condensation stage will thus separate the stripping steam and volatiles from the high temperature condensation zone into a fatty acid product stream 5 together with a stream 4 of steam, on-condensable gases along with traces of fatty acids and other lighter hydrocarbons vapours, and a stream enriched in micronutrients 6. The stream enriched in micronutrients 6 is collected from the vacuum distilling column. The vacuum distillation operation is selected from the group consisting of short-path distillation, wiped-film evaporators, vacuum flash operations, counter-current multistage distillation columns. The overhead condenser for the distillation column and cold condensation step (iii) may thus be combined in a single operation in this embodiment. According to this embodiment the stripping steam may be forced through an upper rectification section in a counter-current distillation column, and this can lead to added pressure drop and requirement for increased diameters in the stripping, rectification and condensation sections to compensate for this, and/or requirement for a more expensive vacuum system providing a deeper suction pressure. Therefore, the choice between the embodiments of the invention, will depend on the circumstances in a specific design case such as type of oil to be treated, whether a new installation of retrofit to an existing installation.

### Examples

### Comparative example

In this comparative test the oils were fed to the stripper column at 260°C and 1% steam is applied for stripping, according to the method shown in Figure 1. The high temperature condensation is taking place at 170°C and the low temperature condensation at 55 °C, in both cases simulated by scrubbing the vapours with a condensate at those temperature levels. The vacuum level at the top of the cold condensation stage was 2.3 mbar. The mass balance was established using a process simulator (PRO/II from SimSci-Esscor) combined with a proprietary Alfa Laval property database for lipids. The results are shown in Table 1.

**Table 1**

| Stream | 1 | 2 | 3 | 4 | 5 | 6 | 7 |
|---|---|---|---|---|---|---|---|
| Flow [kg/hr] | 41666.7 | 437.0 | 10.0 | 467.1 | 272.4 | 128.1 | 41260.0 |

| Composition [wt%] | | | | | | | |
|---|---|---|---|---|---|---|---|
| TAG | 96.7625 | - | - | - | 0.0011 | 11.9955 | 97.7122 |
| DAG | 1.8000 | - | - | - | 0.2169 | 25.4838 | 1.7378 |
| MAG | 0.0500 | - | - | 0.0001 | 4.9954 | 3.9431 | 0.0053 |
| FFA | 0.6000 | - | - | 0.0381 | 89.0850 | 5.3519 | 0.0006 |
| Tocopherols | 0.1350 | - | - | - | 2.4985 | 20.1158 | 0.0574 |
| Sterols | 0.6000 | - | - | - | 2.9684 | 32.9213 | 0.4843 |
| Squalene | 0.0025 | - | - | - | 0.0955 | 0.1851 | 0.0013 |
| Water | 0.0500 | 100.00 | - | 97.8210 | 0.1392 | 0.0036 | 0.0012 |
| Air | - | - | 100.00 | 2.1408 | - | - | - |
| ∑ | 100.00 | 100.00 | 100.00 | 100.00 | 100.00 | 100.00 | 100.00 |

The mass balance deviation was 0.011 kg/hr.

### Example of the invention

In this example was the high temperature condensation stage operating at 185°C, according to the method shown in Figure 2. A multistage distillation column was used to produce the enriched micronutrient stream 6. The distillation column has 3 equilibrium stages, a reboiler and a condenser was simulated with a condenser pressure of 2 mbar. Reboiler temperature was 204°C and the condenser operated at the bubble point of 42°C. The target purity of the micronutrient product was set at 20 wt% tocopherol in this example.

All other conditions was kept as in the example above of the background art, except the steam stripping columns were adjusted slightly to target the same concentration of tocopherol in the product oil stream 7.

It is apparent from the example the virtual absence of tri-acylglycerides, i.e. TAG, and the very low content of di-acylglycerides, i.e. DAG, in the micronutrient product 6. The FFA product had complete absence of TAG and DAG and only traces of mono-acylglycerides, i.e. MAG. The effect of the new configuration of the hot condensation stage has reduced the neutral oil loss from 67 kg/hr to only 23 kg/hr.

The new configuration shows virtually no loss of tocopherols or other micronutrients to the FFA product stream, the loss of tocopherols being less than 0.03 wt% of the tocopherols in the feed stream, which is about 16 grams per hour. The overall test results are shown in Table 2

**Table 2**

| Stream | 1 | 2 | 3 | 4 | 5 | 6 | 7 |
|---|---|---|---|---|---|---|---|
| Flow [kg/hr] | 41666.7 | 437.0 | 10.0 | 467.1 | 194.8 | 162. | 41289.1 |

| Composition [wt%] | | | | | | | |
|---|---|---|---|---|---|---|---|
| TAG | 96.7625 | - | - | - | - | 0.0088 | 97.6473 |
| DAG | 1.8000 | - | - | - | - | 1.8527 | 1.8092 |
| MAG | 0.0500 | - | - | - | 0.1247 | 12.1728 | 0.0019 |
| FFA | 0.6000 | - | - | 0.0320 | 99.6104 | 34.2555 | 0.0002 |
| Tocopherols | 0.1350 | - | - | - | 0.0081 | 20.0000 | 0.0574 |
| Sterols | 0.6000 | - | - | - | 0.0063 | 31.3615 | 0.4819 |
| Squalene | 0.0025 | - | - | - | 0.0005 | 0.3487 | 0.0011 |
| Water | 0.0500 | 100.00 | - | 97.8268 | 0.2499 | - | 0.0011 |
| Air | - | - | 100.00 | 2.1411 | - | - | - |
| ∑ | 100.00 | 100.00 | 100.00 | 100.00 | 100.00 | 100.00 | 100.00 |

The mass balance deviation was 0.002 kg/hr.

Recalculated to annual losses (at 330 operating days per year) this corresponds to a loss of 126 kg/ of tocopherols and 183 ton/yr of neutral oil. In monetary terms these losses therefore translates to 4300 $/yr tocopherol value and 0.22 mill $/yr neutral oil losses, total of about 0.22 mill $ lost per year. Compared to the loss of 2.5 mill $/year applying the prior art we find that the invention recovers about 90% of the value of those losses.

## Claims

1. A method for treating vegetable oils and/or animal fats comprising the following steps:
(i) feeding an oily feed stream (1) to a vacuum steam stripping column operating at a vacuum level of at least 1 mbar, said oily feed stream (1) comprises volatiles such as free fatty acids, micronutrients and neutral oils such as mixtures of tri-, di- and mono-acylglycerides, stripping off fatty acids, micronutrients together with other volatiles, and neutral oils;
(ii) feeding the stripped off fatty acids, micronutrients together with other volatiles, and neutral oils to a high temperature condensing zone, condensing the neutral oils from vapour phase at an elevated temperature of at least 150°C, obtaining condensed neutral oils, retaining and sending back, all or some portion of the condensed neutral oils to the stripping column in step (i) either directly or indirectly via upstream operations, such as to bleaching operation and/or to degumming/neutralisation operation, allowing steam, volatile fatty acids, micronutrients together with other volatiles to be fed to a distilling column in a distilling step before the cold condensation zone in step (iii);
(iii) condensing the volatile fatty acids, micronutrients together with other volatiles in a cold condensation zone operating at a temperature within the range of from about 25°C to about 80°C, obtaining a condensate comprising volatile fatty acids, micronutrients together with other volatiles and a stream (4) comprising steam, non-condensable gases, traces of fatty acids and other lighter hydrocarbons vapours, allowing stream (4) to continue to vacuum system;
wherein a cold condensation zone in step (iii) provides a cold reflux stream which is sent to the distillation column; and
wherein the method also comprises obtaining a stream of neutral oils (7) collected from the vacuum steam stripping column in step (i), a fatty acid product stream (5) and a stream enriched in micronutrients (6).

2. A method for treating vegetable oils and/or animal fats comprising the following steps:
(i) feeding an oily feed stream (1) to a vacuum steam stripping column operating at a vacuum level of at least 1 mbar, said oily feed stream (1) comprises volatiles such as free fatty acids, micronutrients and neutral oils such as mixtures of tri-, di- and mono-acylglycerides, stripping off fatty acids, micronutrients together with other volatiles, and neutral oils;
(ii) feeding the stripped off fatty acids, micronutrients together with other volatiles, and neutral oils to a high temperature condensing zone, condensing the neutral oils from vapour phase at an elevated temperature of at least 150°C, obtaining condensed neutral oils, retaining and sending back, all or some portion of the condensed neutral oils to the stripping column in step (i) either directly or indirectly via upstream operations, such as to bleaching operation and/or to degumming/neutralisation operation, allowing steam, volatile fatty acids, micronutrients together with other volatiles to pass to cold condensation zone in step (iii);
(iii) condensing the volatile fatty acids, micronutrients together with other volatiles in a cold condensation zone operating at a temperature within the range of from about 25°C to about 80°C, obtaining a condensate comprising volatile fatty acids, micronutrients together with other volatiles and a stream (4) comprising steam, non-condensable gases, traces of fatty acids and other lighter hydrocarbons vapours, allowing stream (4) to continue to vacuum system;
(iv) feeding the condensate from the cold condensation zone to a distilling column and distilling in vacuum of at least 0.001 mbar, obtaining a fatty acid product stream (5) and a stream enriched in micronutrients (6);
wherein the method comprises obtaining a stream of neutral oils (7) collected from the vacuum steam stripping column in step (i), a fatty acid product stream (5) and a stream enriched in micronutrients (6).

3. The method according to claim 2, wherein the distilling column is selected from the group consisting of short-path distillation, wiped-film evaporators, one or more subsequent vacuum flash operations, counter-current multistage distillation columns.

4. The method according to claim 2 or 3, wherein the vacuum distillation operation in step (iv) is operating within a range from about 1 to about 10 mbar, preferably from about 2 to about 5 mbar.

5. The method according to any one of the preceding claims, wherein the vacuum steam stripping column in step (i) is operating within a range from about 1 to about 10 mbar, preferably from about 2 to about 5 mbar vacuum level.

6. The method according to any one of the preceding claims, wherein the high temperature condensing zone in step (ii) is operating at a temperature within the range from about 150 to about 230°C, preferably at a temperature within the range from about 170 to about 210°C.

7. The method according to any one of the preceding claims, wherein the cold temperature condensing zone in step (iii) is operating at a temperature within the range of from about 40 to about 60°C.

8. The method according to claim 1 or any of claims 5 - 7 in combination with claim 1, wherein the method also comprises that stripping steam, volatile fatty acids, micronutrients together with other volatiles from the high temperature condensate zone is fed to a distillation column, in the distillation column the stream of stripping steam, volatile fatty acids, micronutrients together with other volatiles meets a stream from the cold temperature condensation zone, leading to formation of a reflux of condensate, obtaining a fatty acid product stream (5).

## Patentansprüche

1. Verfahren zum Behandeln von Pflanzenölen und/oder tierischen Fetten, umfassend die folgenden Schritte:
(i) das Führen eines ölhaltigen Zuführstroms (1) zu einer Vakuumsdampfabtreibsäule, die bei einem Vakuumniveau von mindestens 1 mbar arbeitet, wobei der ölhaltige Zuführstrom (1) flüchtige Substanzen wie freie Fettsäuren, Mikronährstoffe und neutrale Öle wie Mischungen von Tri-Di- und Monoacylglyceriden umfasst, das Abtreiben von Fettsäuren, Mikronährstoffen zusammen mit anderen flüchtigen Substanzen, und neutralen Ölen;
(ii) das Führen der abgetriebenen Fettsäuren, Mikronährstoffe zusammen mit anderen flüchtigen Substanzen und neutralen Ölen zu einer Hochtemperaturkondensierzone, das Kondensieren der neutralen Öle aus der Dampfphase bei einer erhöhten Temperatur von mindestens 150 °C, das Erhalten kondensierter neutraler Öle, das Zurückhalten und Zurückschicken der gesamten oder eines Teils der kondensierten neutralen Öle zu der Abtreibsäule in Schritt (i) entweder direkt oder indirekt über stromaufwärts gelegene Vorgänge, wie beispielsweise einen Bleichvorgang und/oder einen Entschleimungs-/Neutralisationsvorgang, das Gestatten, dass Dampf, flüchtige Fettsäuren, Mikronährstoffe zusammen mit anderen flüchtigen Substanzen zur Kaltkondensationszone in Schritt (iii) übergehen oder das Gestatten, dass Dampf, flüchtige Fettsäuren, Mikronährstoffe zusammen mit anderen flüchtigen Substanzen zu einer Destillationssäule in einem Destillationsschritt vor der Kaltkondensationszone in Schritt (iii) geführt werden;
(iii) das Kondensieren der flüchtigen Fettsäuren, Mikronährstoffe zusammen mit anderen flüchtigen Substanzen in einer Kaltkondensationszone, die bei einer Temperatur innerhalb des Bereichs von etwa 25 °C bis etwa 80 °C funktioniert, das Erhalten eines Kondensat, das flüchtige Fettsäuren, Mikronährstoffe zusammen mit anderen flüchtigen Substanzen umfasst, und eines Stroms (4), der Dampf, nicht kondensierbare Gase, Spuren von Fettsäuren und andere Dämpfe leichter Kohlenwasserstoffe umfasst, das Gestatten, dass der Strom (4) zum Vakuumsystem weitergeht;
wobei eine Kaltkondensationszone in Schritt (iii) einen Kaltrückflussstrom bereitstellt, der zur Destillationssäule geschickt wird;
und das Verfahren das Erhalten eines Stroms neutraler Öle (7), der aus der Vakuumsdampfabtreibsäule in Schritt (i) aufgefangen wird, eines Fettsäureproduktstroms (5) und eines an Mikronährstoffen angereicherten Stroms (6) umfasst.

2. Verfahren zum Behandeln von Pflanzenölen und/oder tierischen Fetten, umfassend die folgenden Schritte:
(i) das Führen eines ölhaltigen Zuführstroms (1) zu einer Vakuumsdampfabtreibsäule, die bei einem Vakuumniveau von mindestens 1 mbar arbeitet, wobei der ölhaltige Zuführstrom (1) flüchtige Substanzen wie freie Fettsäuren, Mikronährstoffe und neutrale Öle wie Mischungen von Tri-Di- und Monoacylglyceriden umfasst, das Abtreiben von Fettsäuren, Mikronährstoffen zusammen mit anderen flüchtigen Substanzen, und neutralen Ölen;
(ii) das Führen der abgetriebenen Fettsäuren, Mikronährstoffe zusammen mit anderen flüchtigen Substanzen und neutralen Ölen zu einer Hochtemperaturkondensierzone, das Kondensieren der neutralen Öle aus der Dampfphase bei einer erhöhten Temperatur von mindestens 150 °C, das Erhalten kondensierter neutraler Öle, das Zurückhalten und Zurückschicken der gesamten oder eines Teils der kondensierten neutralen Öle zu der Abtreibsäule in Schritt (i) entweder direkt oder indirekt über stromaufwärts gelegene Vorgänge, wie beispielsweise einen Bleichvorgang und/oder einen Entschleimungs-/Neutralisationsvorgang, das Gestatten, dass Dampf, flüchtige Fettsäuren, Mikronährstoffe zusammen mit anderen flüchtigen Substanzen zur Kaltkondensationszone in Schritt (iii) übergehen oder das Gestatten, dass Dampf, flüchtige Fettsäuren, Mikronährstoffe zusammen mit anderen flüchtigen Substanzen zu einer Destillationssäule in einem Destillationsschritt vor der Kaltkondensationszone in Schritt (iii) geführt werden;
(iii) das Kondensieren der flüchtigen Fettsäuren, Mikronährstoffe zusammen mit anderen flüchtigen Substanzen in einer Kaltkondensationszone, die bei einer Temperatur innerhalb des Bereichs von etwa 25 °C bis etwa 80 °C funktioniert, das Erhalten eines Kondensat, das flüchtige Fettsäuren, Mikronährstoffe zusammen mit anderen flüchtigen Substanzen umfasst, und eines Stroms (4), der Dampf, nicht kondensierbare Gase, Spuren von Fettsäuren und andere Dämpfe leichter Kohlenwasserstoffe umfasst, das Gestatten, dass der Strom (4) zum Vakuumsystem weitergeht;
(iv) das Führen des Kondensats von der Kaltkondensationszone zu einer Destillationssäule und das Destillieren unter Vakuum von mindestens 0,001 mbar, das Erhalten eines Fettsäureproduktstroms (5) und eines an Mikronährstoffen (6) angereicherten Stroms;
und das Verfahren das Erhalten eines Stroms neutraler Öle (7), der aus der Vakuumsdampfabtreibsäule in Schritt (i) aufgefangen wird, eines Fettsäureproduktstroms (5) und eines an Mikronährstoffen angereicherten Stroms (6) umfasst.

3. Verfahren zum Behandeln von Pflanzenölen und/oder tierischen Fetten nach Anspruch 2, wobei die Destillationssäule aus der Gruppe ausgewählt wird bestehend aus Kurzwegdestillation, Wischfilmverdampfern, einem oder mehreren darauffolgenden Vakuum-Flashvorgängen, Gegenstrom-Mehrstufendestillationssäulen.

4. Verfahren zum Behandeln von Pflanzenölen und/oder tierischen Fetten nach Anspruch 2 oder 3, wobei der Vakuumsdestillationsvorgang in Schritt (iv) innerhalb eines Bereichs von etwa 1 bis etwa 10 mbar, bevorzugt etwa 2 bis etwa 5 mbar erfolgt.

5. Verfahren zum Behandeln von Pflanzenölen und/oder tierischen Fetten nach einem der vorhergehenden Ansprüche, wobei die Vakuumsdampfabtriebsäule in Schritt (i) innerhalb eines Vakuumniveaus im Bereich von etwa 1 bis etwa 10 mbar, bevorzugt von etwa 2 bis etwa 5 mbar arbeitet.

6. Verfahren zum Behandeln von Pflanzenölen und/oder tierischen Fetten nach einem der vorhergehenden Ansprüche, wobei die Hochtemperaturkondensierzone in Schritt (ii) bei einer Temperatur innerhalb des Bereichs von etwa 150 bis etwa 230 °C, bevorzugt bei einer Temperatur innerhalb des Bereichs von etwa 170 bis etwa 210° C arbeitet.

7. Verfahren zum Behandeln von Pflanzenölen und/oder tierischen Fetten nach einem der vorhergehenden Ansprüche, wobei die Kalttemperaturkondensierzone in Schritt (iii) bei einer Temperatur innerhalb des Bereichs von etwa 40 bis etwa 60 °C arbeitet.

8. Verfahren nach Anspruch 1 oder einem der Ansprüche 5 - 7 in Kombination mit Anspruch 1, wobei das Verfahren auch umfasst, dass Abtreibdampf, flüchtigen Fettsäuren, Mikronährstoffe zusammen mit anderen flüchtigen Substanzen aus der Hochtemperaturkondensatzone zu einer Destillationssäule geführt werden, in der Destillationssäule der Strom von Abtriebdampf, flüchtigen Fettsäuren, Mikronährstoffen zusammen mit anderen flüchtigen Substanzen auf einen Strom aus der Kalttemperaturkondensationszone auftrifft, was zur Bildung eines Rückflusses von Kondensat führt, wodurch ein Fettsäureproduktstrom (5) erhalten wird.

## Revendications

1. Procédé de traitement d'huiles végétales et/ou de matières grasses animales comprenant les étapes suivantes :
(i) alimentation d'un écoulement d'alimentation huileux (1) vers une colonne d'extraction à la vapeur sous vide fonctionnant à un niveau de vide d'au moins 1 mbar, ledit écoulement d'alimentation huileux (1) comprenant des matières volatiles telles que des acides gras libres, des micronutriments et des huiles neutres telles que des mélanges de tri-, di- et monoacylglycérides, élimination par extraction à la vapeur des acides gras, des micronutriments conjointement à d'autres matières volatiles et des huiles neutres ;
(ii) alimentation des acides gras, des micronutriments conjointement à d'autres matières volatiles et des huiles neutres éliminés par extraction à la vapeur vers une zone de condensation à haute température, condensation des huiles neutres de la phase vapeur à une température élevée d'au moins 150°C, obtention d'huiles neutres condensées, rétention et renvoi de la totalité ou d'une partie des huiles neutres condensées vers la colonne d'extraction dans l'étape (i), soit directement, soit indirectement par l'intermédiaire d'opérations en amont, telles qu'une opération de blanchiment et/ou une opération de dégommage/neutralisation, permettant à la vapeur, aux acides gras volatils, aux micronutriments conjointement à d'autres matières volatiles d'être alimentés vers une colonne de distillation dans une étape de distillation avant la zone de condensation à froid dans l'étape (iii) ;
(iii) condensation des acides gras volatils, des micronutriments conjointement à d'autres matières volatiles dans une zone de condensation à froid fonctionnant à une température située dans la plage d'environ 25°C à environ 80°C, obtention d'un condensat comprenant des acides gras volatils, des micronutriments conjointement à d'autres matières volatiles et d'un écoulement (4) comprenant de la vapeur, des gaz non condensables, des traces d'acides gras et d'autres vapeurs d'hydrocarbures plus légers, permettant à l'écoulement (4) de progresser vers le système de vide ;
dans lequel une zone de condensation à froid dans l'étape (iii) produit un écoulement de reflux froid qui est envoyé à la colonne de distillation ; et
dans lequel le procédé comprend également l'obtention d'un écoulement d'huiles neutres (7) recueilli à partir de la colonne d'extraction à la vapeur sous vide dans l'étape (i), d'un écoulement de produits acides gras (5) et d'un écoulement enrichi en micronutriments (6).

2. Procédé de traitement d'huiles végétales et/ou de matières grasses animales comprenant les étapes suivantes :
(i) alimentation d'un écoulement d'alimentation huileux (1) vers une colonne d'extraction à la vapeur sous vide fonctionnant à un niveau de vide d'au moins 1 mbar, ledit écoulement d'alimentation huileux (1) comprenant des matières volatiles telles que des acides gras libres, des micronutriments et des huiles neutres telles que des mélanges de tri-, di- et monoacylglycérides, élimination par extraction à la vapeur des acides gras, des micronutriments conjointement à d'autres matières volatiles et des huiles neutres ;
(ii) alimentation des acides gras, des micronutriments conjointement à d'autres matières volatiles et des huiles neutres éliminés par extraction à la vapeur vers une zone de condensation à haute température, condensation des huiles neutres de la phase vapeur à une température élevée d'au moins 150°C, obtention d'huiles neutres condensées, rétention et renvoi de la totalité ou d'une partie des huiles neutres condensées vers la colonne d'extraction dans l'étape (i) soit directement, soit indirectement par l'intermédiaire d'opérations en amont, telles qu'une opération de blanchiment et/ou une opération de dégommage/neutralisation, permettant à la vapeur, aux acides gras volatils, aux micronutriments conjointement à d'autres matières volatiles de passer vers la zone de condensation à froid dans l'étape (iii) ;
(iii) condensation des acides gras volatils, des micronutriments conjointement à d'autres matières volatiles dans une zone de condensation à froid fonctionnant à une température située dans la plage d'environ 25°C à environ 80°C, obtention d'un condensat comprenant des acides gras volatils, des micronutriments conjointement à d'autres matières volatiles et d'un écoulement (4) comprenant de la vapeur, des gaz non condensables, des traces d'acides gras et d'autres vapeurs d'hydrocarbures plus légers, permettant à l'écoulement (4) de progresser vers le système de vide ;
(iv) alimentation du condensat de la zone de condensation à froid vers une colonne de distillation et distillation sous vide d'au moins 0,001 mbar, obtention d'un écoulement de produits acides gras (5) et d'un écoulement enrichi en micronutriments (6) ;
dans lequel le procédé comprend l'obtention d'un écoulement d'huiles neutres (7) recueilli à partir de la colonne d'extraction à la vapeur sous vide dans l'étape (i), d'un écoulement de produits acides gras (5) et d'un écoulement enrichi en micronutriments (6).

3. Procédé selon la revendication 2, dans lequel la colonne de distillation est sélectionnée dans le groupe comprenant la distillation court trajet, des évaporateurs à film raclé, une ou plusieurs opérations flash sous vide ultérieures, des colonnes de distillation à étages multiples à contre-courant.

4. Procédé selon la revendication 2 ou 3, dans lequel l'opération de distillation sous vide dans l'étape (iv) fonctionne à l'intérieur d'une plage d'environ 1 mbar à environ 10 mbar, préférablement d'environ 2 mbar à environ 5 mbar.

5. Procédé selon l'une quelconque des revendications précédentes, dans lequel la colonne d'extraction à la vapeur sous vide dans l'étape (i) fonctionne à l'intérieur d'une plage de niveau de vide d'environ 1 mbar à environ 10 mbar, préférablement d'environ 2 mbar à environ 5 mbar.

6. Procédé selon l'une quelconque des revendications précédentes, dans lequel la zone de condensation à haute température dans l'étape (ii) fonctionne à une température située dans la plage d'environ 150°C à environ 230°C, préférablement à une température située dans la plage d'environ 170°C à environ 210°C.

7. Procédé selon l'une quelconque des revendications précédentes, dans lequel la zone de condensation à basse température dans l'étape (iii) fonctionne à une température située dans la plage d'environ 40°C à environ 60°C.

8. Procédé selon la revendication 1 ou l'une quelconque des revendications 5-7 en combinaison avec la revendication 1, le procédé comprenant également le fait que de la vapeur d'extraction ainsi que des acides gras volatils, des micronutriments conjointement à d'autres matières volatiles provenant de la zone de condensation à haute température sont alimentés vers une colonne de distillation, dans la colonne de distillation, l'écoulement de vapeur d'extraction ainsi que d'acides gras volatils, de micronutriments conjointement à d'autres matières volatiles rencontre un écoulement provenant de la zone de condensation à basse température, conduisant à la formation d'un reflux du condensat, obtenant un écoulement de produits acides gras (5).
